Europäisches Patentamt

European Patent Office

Office européen des brevets

(11) Veröffentlichungsnummer: **0 305 831**
**A2**

(12) **EUROPÄISCHE PATENTANMELDUNG**

(21) Anmeldenummer: **88113558.6**

(22) Anmeldetag: **20.08.88**

(51) Int. Cl.4: **B23Q 11/14 , B23Q 17/12 , B24B 1/00**

(30) Priorität: **04.09.87 DE 3729541**

(43) Veröffentlichungstag der Anmeldung:
**08.03.89 Patentblatt 89/10**

(84) Benannte Vertragsstaaten:
**CH DE GB IT LI**

(71) Anmelder: **KÖRBER AG**
**Kampchaussee 8-32 Postfach 80 04 60**
**D-2050 Hamburg 80(DE)**

(72) Erfinder: **Uhlig, Uwe**
**Hermann-Burgdorf-Strasse 120**
**D-2110 Buchholz(DE)**
Erfinder: **Mushardt, Heinrich, Dr.**
**Krogbuschweg 37b**
**D-2051 Neu-Börnsen(DE)**
Erfinder: **Lütjens, Peter**
**Travemünder Stieg**
**D-2000 Hamburg 73(DE)**

(54) **Verfahren und Werkzeug-, insbesondere Schleifmaschine, zur Bearbeitung von Werkstücken.**

(57)
2.1. Bei Werkzeugmaschinen mit rotativen Werkzeugen, insbesondere bei Schleifmaschinen, können an der Werkzeugspindel Schwingungen auftreten, die insbesondere von Lüfter des Werkzeugspindelmctors herrühren und die Werkstückbearbeitungsqualität (das Schliffbild) negativ beeinflussen. Mit der Erfindung soll deshalb eine Erhöhung der Bearbeitungsqualität von auf solchen Maschinen bearbeiteten Werkstücken erzielt werden.

2.2. Es ist deshalb vorgesehen, die Schwingungseinflüsse des Lüfters (12) gesteuert zu eliminieren, zumindest während der Feinbearbeitung des Werkstückes (4), wobei in Abhängigkeit von der gemessenen Temperatur (T) des Werkstückspindelmotors (11) und/oder von den gemessenen Schwingungen (S) ein Stellsignal (SL) an den Lüfter zu dessen Ein- bzw. Ausschalten oder zur Veränderung dessen Drehzahl abgegeben wird. Eine Lüfterbeeinflussung ist auch durch einen programmierten Schaltbefehl (Maschinenprogramm) möglich.

2.3. Die Anwendung der vorgeschlagenen Lösung ist bei Werkzeugmaschinen mit rotativen Werkzeugen möglich. Insbesondere ist diese Lösung aber für Schleifmaschinen vorgesehen.

Fig. 2

## Verfahren und Werkzeug-, insbesondere Schleifmaschine, zur Bearbeitung von Werkstücken

Die Erfindung betrifft ein Verfahren zur Bearbeitung von Werkstücken auf Werkzeug-, insbesondere Schleifmaschinen, mit rotativen Werkzeugen, wobei das Werkzeug mittels einer Werkzeugspindel durch einen mittels eines Lüfters gekühlten Motor angetrieben wird.

Die Erfindung bezieht sich des weiteren auf eine Werkzeugmaschine, insbesondere Schleifmaschine, mit einem rotativen Werkzeug, wobei das Werkzeug auf einer Werkzeugspindel angeordnet ist, zu deren Antrieb ein mittels eines Lüfters gekühlter Motor vorgesehen ist.

Bei der Bearbeitung von Werkstücken mittels vorstehend genannter Maschinen, insbesondere bei der Bearbeitung auf Schleifmaschinen mit rotierenden Schleifscheiben, machen sich Schwingungseinflüsse aus mit der Werkzeug-bzw. Schleifspindel in Verbindung stehenden Aggregaten negativ auf die Bearbeitungsqualität dieser Werkstücke bemerkbar. Es wurde festgestellt, daß derartige Schwingungsprobleme insbesondere vom zur Kühlung des Werkzeugspindelmotors vorgesehenen Lüfter verursacht werden.

Der Erfindung liegt die Aufgabe zugrunde, die Bearbeitungsqualität von auf derartigen Maschinen zu bearbeitenden Werkstücken zu erhöhen.

Erfindungsgemäß wird das nach einem Verfahren dadurch erreicht, daß von mit der Werkzeugspindel korrespondierenden Aggregaten herrührende Schwingungen zumindest während bestimmter Werkstückbearbeitungsprozesse gesteuert eliminiert werden. Weiterhin ist gemäß der Erfindung vorgesehen, daß zum Eliminieren von Schwingungseinflüssen des Lüfters des Werkzeugspindelmotors zumindest während der Werkstückfeinbearbeitung eine gesteuerte Drehzahlabsenkung oder Stillsetzung des Lüfters erfolgt. Das erfindungsgemäße Verfahren besteht des weiteren darin, daß die Drehzahlabsenkung oder Stillsetzung des Lüfters in Abhängigkeit von der gemessenen Motortemperatur des Werkzeugspindelmotors und/oder von den gemessenen Schwingungen an der Werkzeugspindel erfolgt. Eine andere Möglichkeit besteht darin, daß das Stillsetzen des Lüfters durch einen programmierten Befehl erfolgt. Ein solcher Schaltbefehl kann beispielsweise Bestandteil des Maschinenprogrammes sein und in diesem zum Beispiel für den Feinbearbeitungsprozeß vorgesehen werden.

Eine Werkzeug-, insbesondere Schleifmaschine, weist hierzu erfindungsgemäß Mittel auf zum gesteuerten Eliminieren von auf die Werkzeugspindel wirkenden Schwingungsquellen zumindest während bestimmter Werkstückbearbeitungsprozesse. Die erfindungsgemäße Maschine besteht weiterhin darin, daß Mittel vorgesehen sind zum Eliminieren von Schwingungseinflüssen des Lüfters des Werkzeugspindelmotors zumindest während der Werkstückfeinbearbeitung. Hierzu besteht eine erfindungsgemäße Variante darin, daß ein Regelgerät vorgesehen ist zum Ein- und Ausschalten bzw. zum Verändern der Drehzahl des Lüfters in Abhängigkeit von der gemessenen Temperatur des Werkzeugspindelmotors und/oder von den gemessenen Schwingungen an der Werkzeugspindel. Eine andere Variante ist darin zu sehen, daß eine Steuereinrichtung vorgesehen ist zum Ausschalten des Lüfters gemäß einem programmierten Befehl und unter Beachtung von Grenzwerten der Temperatur des Werkzeugspindelmotors und der Schwingungen. Erfindungsgemäß sind weiterhin Mittel zum Erfassen der Temperatur des Werkzeugspindelmotors und der Schwingungen an der Werkzeugspindel vorgesehen. Hierzu besteht ein weiteres Merkmal der Erfindung darin, daß zum Erfassen der Temperatur in Werkzeugspindelmotor ein Temperaturfühler angeordnet ist. Außerdem ist vorgesehen, daß zum Erfassen der Schwingungen ein Schwingungsaufnehmer auf einem starken Schwingungen unterliegenden Bauteil angeordnet ist. Die erfindungsgemäße Maschine ist auch dadurch gekennzeichnet, daß der Temperaturfühler und der Schwingungsaufnehmer mit dem Regelgerät bzw. mit der Steuereinrichtung, an diese ein Temperatursignal und ein Schwingungssignal abgebend, verbunden sind. Außerdem besteht die erfindungsgemäße Maschine darin, daß das Regelgerät bzw. die Steuereinrichtung mit dem Lüfter, an diesen ein entsprechendes Stellsignal zum Ein- oder Ausschalten oder zur Veränderung der Lüfterdrehzahl abgebend, verbunden sind. Zusätzlich kann noch vorgesehen sein, daß die Steuereinrichtung mit dem Werkzeugspindelmotor, an diesen ein Stellsignal zur Veränderung der Werkzeugspindeldrehzahl abgebend, verbunden ist.

Durch die Erfindung sind die Schwingungseinflüsse auf die Werkstückbearbeitung beseitigt, und zwar mindestens insoweit, daß sie bei der Feinbearbeitung (Schlichten) mit Sicherheit ausgeschlossen sind. Das führt zu einer wesentlichen Verbesserung der Bearbeitungsqualität von Werkstükken. Die Oberflächen von einer Schleifbearbeitung unterzogenen Werkstücken weisen ein einwandfreies Schliffbild auf.

Die Erfindung soll nachstehend anhand von Ausführungsbeispielen näher erläutert werden.

In den Zeichnungen zeigen an einer schematisch dargestellten Schleifmaschine die

Figuren 1 und 2 zwei Varianten mit einem von einem Regelgerät abgegebenen Schaltsignal an den Lüfter eines Schleifspindelmotors und

Figuren 3 und 4 zwei Varianten mit einem von einer Steuereinrichtung abgegebenen programmierten Schaltsignal an den Lüfter eines Schleifspindelmotors.

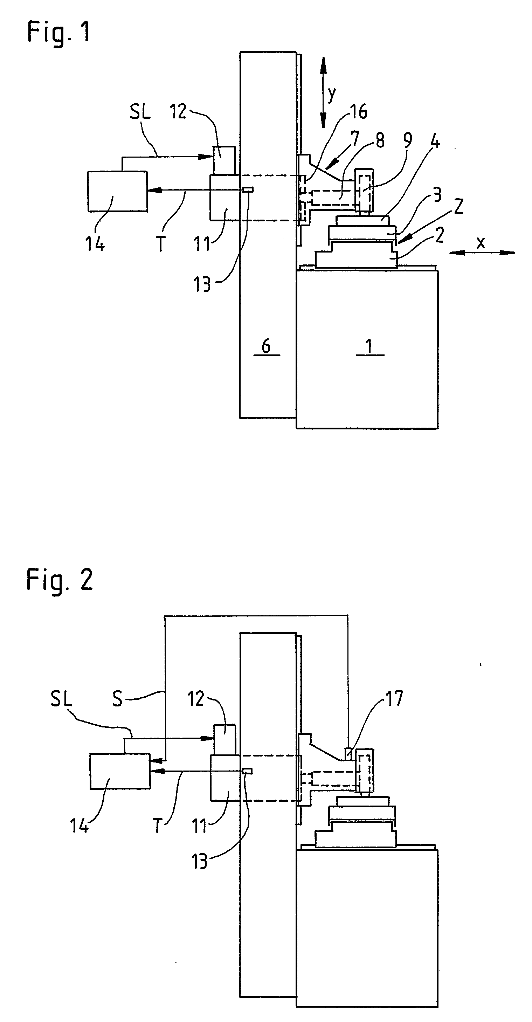

In den Figuren 1 bis 4 sind verschiedene Ausführungsvarianten der Erfindung an einer Schleifmaschine, hier an einer üblichen Flachschleifmaschine, gezeigt. Die Schleifmaschine ist nur vereinfacht schematisch dargestellt. Sie besteht im wesentlichen aus einem Maschinengestell 1 mit einem Werkstückschlitten 2, welcher in der X-Achse bewegbar ist. Auf dem Werkstückschlitten 2 ist ein Werkstücktisch 3 in der Z-Achse (rechtwinklig zur X-Achse) bewegbar angeordnet, welcher ein Werkstück 4 aufnimmt. An einer Säule 6 ist ein Schleifkopf 7 angeordnet, der vertikal in der Y-Achse für die Zustellbewegung bewegbar ist. Der Schleifkopf 7 enthält eine Werkzeugspindel (Schleifspindel) 8, welche eine Schleifscheibe 9 trägt und durch einen Motor 11 angetrieben wird. Der Werkzeugspindelmotor 11 ist zu seiner Kühlung mit einem Lüfter 12 versehen.

Da festgestellt wurde, daß insbesondere von diesem Lüfter 12 ausgehende Schwingungen sich negativ auf die Bearbeitungsqualität des Werkstückes 4 auswirken, sollen diese Schwingungseinflüsse möglichst weitestgehend eliminiert werden. So müssen diese Schwingungseinflüsse mindestens während der Feinbearbeitung, also während des Schlichtens des Werkstückes 4, beseitigt werden, wohingegen sie beim Schruppen kaum stören und hingenommen werden können.

Gemäß der Figur 1 soll deshalb eine Einflußnahme auf den Lüfter 12, d. h. dessen Ein- und Ausschalten bzw. dessen Veränderung der Drehzahl, in Abhängigkeit von der im Werkzeugspindelmotor 11 gemessenen Temperatur erfolgen, die beim Schlichten allgemein aufgrund der geringen Schleifkräfte und des geringen Materialabtrages niedriger ist als beispielsweise beim Schruppen. Im Motor 11 ist hierzu ein Temperaturfühler 13 vorgesehen, der ein Temperatursignal T an ein Regelgerät 14 abgibt. In Abhängigkeit von diesem Temperatursignal T gibt das Regelgerät 14 ein entsprechendes Stellsignal SL an den Lüfter 12 im Sinne dessen Ein- oder Abschaltens bzw. dessen Drehzahlveränderung ab. So wird der Lüfter 12 eingeschaltet, wenn die gemessene Motortemperatur über einen Temperaturgrenzwert ansteigt, und abgeschaltet, wenn die Motortemperatur unterhalb dieses Grenzwertes liegt. Ansonsten steuert das Regelgerät 14 die Lüfterdrehzahl, um die Motortemperatur im Bereich zwischen einer minimalen und maximalen Temperatur zu regeln. Mit dem Befehl zum Ausschalten des Lüfters 12 können gegebenenfalls gleichzeitig noch weitere Bedingungen für diesen Zustand geprüft werden, beispielsweise ob die Motorstromaufnahme unterhalb ihres Grenzwertes liegt. Für den Fall, daß der Motor 11 mit einem Eigenlüfter 16 versehen ist, wie er in der Figur 1 angedeutet ist, ist beim Ausschalten des Lüfters 12 zu prüfen, ob die vorhandene Drehzahl des Motors 11 für diesen Eigenlüfter 16 zur Erzeugung einer Kühlwirkung ausreichend ist. Ein solcher Eigenlüfter 16 ist am Antriebsstrang des Motors 11 angeordnet. Er könnte zum Beispiel auf einem hier nicht gezeigten speziellen Kupplungsteil zwischen dem Motor 11 und der Werkzeugspindel 8 angeordnet sein. Der Eigenlüfter 16 ist sehr klein dimensioniert, so daß er keine Störungen bezüglich der Werkstückbearbeitung verursacht. Aufgrund seiner kleinen Dimension kühlt er natürlich bei niederen Drehzahlen nicht ausreichend und muß durch den Lüfter 12 (Fremdlüfter) unterstützt werden. Bei hohen Drehzahlen und einer niedrigen Motorstromaufnahme würde er jedoch eine ausreichende Kühlwirkung erzielen. Der Temperaturfühler 13 kann in die Motorwicklungen integriert sein, wie das beispielsweise bei herkömmlichen Motorschutzschaltungen bekannt ist, und er kann als Thermistor, Bimetallschalter, Thermoelement oder dergl. ausgebildet sein.

In der Figur 2 ist eine Variante gezeigt, bei der die Einflußnahme auf den Lüfter 12 in Abhängigkeit von der gemessenen Motortemperatur und von den gemessenen Schwingungen erfolgt. Das Regelgerät 14 erhält hierbei außer dem Temperatursignal T noch ein Schwingungssignal S, welches ein Schwingungsaufnehmer 17 abgibt. Der Schwingungsaufnehmer ist hier am Schleifkopf 7 angeordnet. Er kann aber auch an einem anderen starken Schwingungen unterliegenden Bauteil vorgesehen sein, d. h. an einem Bauteil, dessen Schwingungen die Werkstückbearbeitung stören, also das Schliffbild beeinflussen. Bei dieser Ausführung schaltet das Regelgerät 14 den Lüfter 12 ein, wenn die durch den Temperaturfühler 13 gemessene Temperatur größer ist als der Temperaturgrenzwert. Es schaltet den Lüfter aus, wenn die durch den Schwingungsaufnehmer 17 gemessenen Schwingungen einen Schwingungsgrenzwert übersteigen. Das Regelgerät 14 unterbricht die Schlichtbearbeitung des Werkstückes 4, wenn die gemessene Motortemperatur größer ist als der Temperaturgrenzwert und/oder wenn die gemessenen Schwingungen über dem Schwingungsgrenzwert liegen. Der Schwingungsgrenzwert ist hierbei ein Wert, unterhalb dessen liegende Schwingungen keinen wesentlichen Einfluß auf die Bearbeitungsqualität des Werkstückes haben.

Es ist noch zu erwähnen, daß das Schwingungssignal S mittels eines Filters der Fremderregung, d. h. der Lüfterdrehzahl, zugeordnet werden kann.

Wenn die Erregung nicht von Lüfter 12 verursacht wird, erfolgt eine Meldung. Daraus kann entnommen werden, daß die auftretenden Schwingungen woanders zu suchen sind, beispielsweise in Unwuchten, und daß sie mit den beschriebenen erfindungsgemäßen Maßnahmen nicht zu beeinflussen sind. Als Kriterium gilt, daß der Quotient aus dem Schwingungssignal S und dem gefilterten Schwingungssignal größer ist als der Schwingungsgrenzwert.

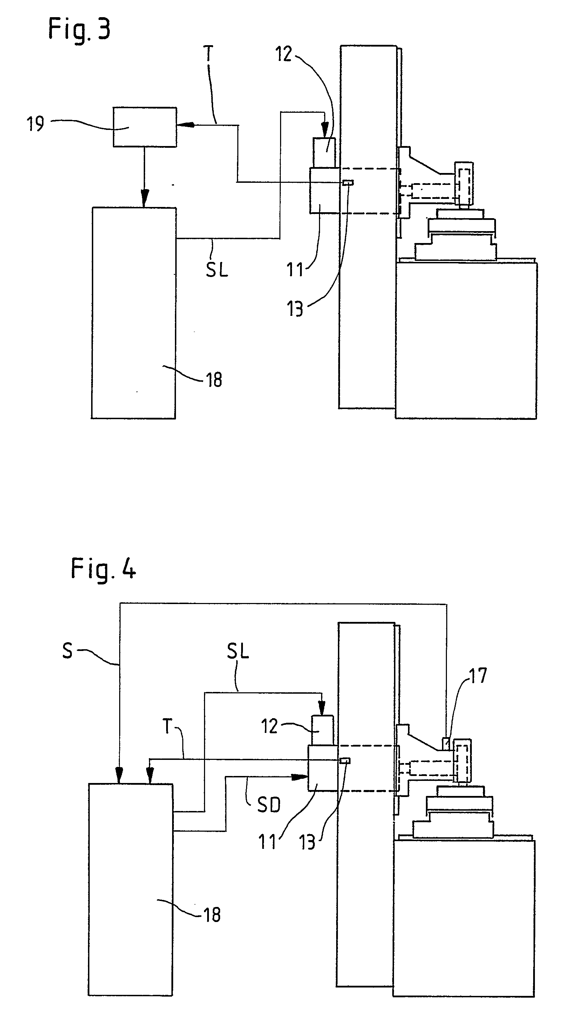

Gemäß Figur 3 ist eine Variante aufgezeigt, wonach der Schaltbefehl zum Aus- bzw. Einschalten des Lüfters 12 programmiert wird. Hierbei ist eine Steuereinrichtung 18, z. B. die Maschinensteuerung der Schleifmaschine, vorgesehen, welche ein Maschinenprogramm umsetzt, welches für definierte Zeitpunkte, beispielsweise für die Schlichtbearbeitung des Werkstückes 4, einen Befehl zum Ausschalten des Lüfters 12 enthält. Gleichzeitig erfolgt in bereits beschriebener Weise die Messung der Temperatur des Motors 11. Das vom Temperaturfühler 13 angegebene Temperatursignal T wird hierbei über einen Meßverstärker 19 verstärkt der Steuereinrichtung 18 aufgegeben. Die Steuereinrichtung 18 gibt ein Stellsignal SL zum Ausschalten des Lüfters 12 ab, wenn die gemessene Motortemperatur unterhalb des Temperaturgrenzwertes liegt und/oder der programmierte Schaltbefehl zum Ausschalten des Lüfters 12 anliegt. Das Einschalten des Lüfters 12 erfolgt sinngemäß, wenn die gemessene Motortemperatur größer ist als der Temperaturgrenzwert und/oder der programmierte Schaltbefehl zum Einschalten des lüfters 12 anliegt.

Eine weitere Variante mit einem programmierten Schaltbefehl zur Lüfterbeeinflussung über eine Steuereinrichtung 18 ist in der Figur 4 gezeigt, wobei außer der in Figur 3 gezeigten Temperaturmessung auch die bereits beschriebene Schwingungsmessung vorgesehen ist. Wenn beispielsweise die Bedingung programmiert ist, daß das Schwingungssignal S kleiner sein muß als der Schwingungsgrenzwert, was zum Beispiel bei der Schlichtbearbeitung des Werkstückes 4 der Fall ist, so prüft die Steuereinrichtung 18 die Meßsignale S und T mit der Folge, daß der Lüfter 12 aufgeschaltet wird, wenn die gemessene Temperatur (Temperatursignal T) kleiner ist als der Temperaturgrenzwert oder wenn die gemessene Temperatur kleiner und die gemessenen Schwingungen größer als der jeweilige Grenzwert sind. Wenn der gemessene Schwingungswert (Schwingungssignal S) größer ist als der Schwingungsgrenzwert, erfolgt eine Änderung der Schleifspindeldrehzahl infolge eines von der Steuereinrichtung 18 an den Werkzeugspindelmotor 11 abgegebenen Stellsignals SD. Bei der im Maschinenprogramm programmierten Bedingung, daß der gemessene Schwingungswert kleiner sein muß als der Schwingungsgrenzwert, ist es vorteilhaft, wenn die Schwingungsmessung (Schwingungssignal S) kontinuierlich überwacht wird. Für den Fall, daß der gemessene Schwingungswert sich dem Grenzwert nähert, werden die Schleifspindeldrehzahl (über das Stellsignal SD) und/oder der programmierte Vorschub reduziert. Bei der programmierten Bedingung, daß der gemessene Schwingungswert kleiner ist als der Schwingungsgrenzwert, wird der Bearbeitungsschritt des Schlichtens nur ausgeführt, wenn ein unterhalb des Grenzwertes liegender Schwingungswert durch die beschriebenen Maßnahmen zum Ausschalten des Lüfters 12 und gegebenenfalls durch eine Änderung der Schleifspindeldrehzahl erreicht wird und wenn die gemessene Motortemperatur unterhalb des Temperaturgrenzwertes liegt. Fall erforderlich, wird der Programmablauf für eine von der Motortemperatur abhängige Zeit unterbrochen.

## Ansprüche

1. Verfahren zur Bearbeitung von Werkstücken auf Werkzeugmaschinen, insbesondere Schleifmaschinen, mit rotativen Werkzeugen, wobei das Werkzeug mittels einer Werkzeugspindel durch einen mittels eines Lüfters gekühlten Motor angetrieben wird, dadurch gekennzeichnet, daß von mit der Werkzeugspindel (8) korrespondierenden Aggregaten herrührende Schwingungen zumindest während bestimmter Werkstückbearbeitungsprozesse gesteuert eliminiert werden.

2. Verfahren nach Anspruch 1, dadurch gekennzeichnet, daß zum Eliminieren von Schwingungseinflüssen des Lüfters (12) des Werkzeugspindelmotors (11) zumindest während der Werkstückfeinbearbeitung eine gesteuerte Drehzahlabsenkung oder Stillsetzung des Lüfters (12) erfolgt.

3. Verfahren nach Anspruch 2, dadurch gekennzeichnet, daß die Drehzahlabsenkung oder Stillsetzung des Lüfters (12) in Abhängigkeit von der gemessenen Motortemperatur (T) des Werkzeugspindelmotors (11) und/oder von den gemessenen Schwingungen (S) an der Werkzeugspindel (8) erfolgt.

4. Verfahren nach Anspruch 2, dadurch gekennzeichnet, daß das Stillsetzen des Lüfters (12) durch einen programmierten Befehl erfolgt.

5. Werkzeugmaschine, insbesondere Schleifmaschine, mit einem rotativen Werkzeug, wobei das Werkzeug auf einer Werkzeugspindel angeordnet ist, zu deren Antrieb ein mittels eines Lüfters gekühlter Motor vorgesehen ist, dadurch gekennzeichnet, daß Mittel (13, 14, 17, 18) vorgesehen sind zum gesteuerten Eliminieren von auf die Werkzeugspindel (8) wirkenden Schwingungsquellen zumindest während bestimmter Werkstückbearbeitungsprozesse.

6. Werkzeug-, insbesondere Schleifmaschine, nach Anspruch 5, dadurch gekennzeichnet, daß Mittel (13, 14, 17, 18) vorgesehen sind zum Eliminieren von Schwingungseinflüssen des Lüfters (12) des Werkzeugspindelmotors (11) zumindest während der Werkstückfeinbearbeitung.

7. Werkzeug-, insbesondere Schleifmaschine, nach Anspruch 6, dadurch gekennzeichnet, daß ein Regelgerät (14) vorgesehen ist zum Ein- und Ausschalten bzw. zum Verändern der Drehzahl des Lüfters (12) in Abhängigkeit von der gemessenen Temperatur (T) des Werkzeugspindelmotors (11) und/oder von den gemessenen Schwingungen (S) an der Werkzeugspindel (8).

8. Werkzeug-, insbesondere Schleifmaschine, nach Anspruch 6, dadurch gekennzeichnet, daß eine Steuereinrichtung (18) vorgesehen ist zum Ausschalten des Lüfters (12) gemäß einem programmierten Befehl und unter Beachtung von Grenzwerten der Temperatur des Werkzeugspindelmotors (11) und der Schwingungen.

9. Werkzeug-, insbesondere Schleifmaschine, nach Anspruch 7 oder 8, dadurch gekennzeichnet, daß Mittel (13, 17) zum Erfassen der Temperatur des Werkzeugspindelmotors (11) und der Schwingungen an der Werkzeugspindel (8) vorgesehen sind.

10. Werkzeug-, insbesondere Schleifmaschine, nach Anspruch 9, dadurch gekennzeichnet, daß zum Erfassen der Temperatur im Werkzeugspindelmotor (11) ein Temperaturfühler (13) angeordnet ist.

11. Werkzeug-, insbesondere Schleifmaschine, nach Anspruch 9, dadurch gekennzeichnet, daß zum Erfassen der Schwingungen ein Schwingungsaufnehmer (17) auf einem starken Schwingungen unterliegenden Bauteil (7) angeordnet ist.

12. Werkzeug-, insbesondere Schleifmaschine, nach einem oder mehreren der Ansprüche 7 bis 11, dadurch gekennzeichnet, daß der Temperaturfühler (13) und der Schwingungsaufnehmer (17) mit dem Regelgerät (14) bzw. mit der Steuereinrichtung (18), an diese ein Temperatursignal (T) und ein Schwingungssignal (S) abgebend, verbunden sind.

13. Werkzeug-, insbesondere Schleifmaschine, nach einem oder mehreren der Ansprüche 7 bis 12, dadurch gekennzeichnet, daß das Regelgerät (14) bzw. die Steuereinrichtung (18) mit dem Lüfter (12), an diesen ein entsprechendes Stellsignal (SL) zum Ein- oder Ausschalten oder zur Veränderung der Lüfterdrehzahl abgebend, verbunden sind.

14. Werkzeug-, insbesondere Schleifmaschine, nach einem oder mehreren der Ansprüche 7 bis 13, dadurch gekennzeichnet, daß die Steuereinrichtung (18) mit dem Werkzeugspindelmotor (11), an diesen ein Stellsignal (SD) zur Veränderung der Werkzeugspindeldrehzahl abgebend, verbunden ist.

Fig. 1

Fig. 2

Fig. 3

Fig. 4